# EUROPÄISCHE PATENTSCHRIFT

(11) **EP 3 187 409 B1**
(45) Veröffentlichungstag und Bekanntmachung des Hinweises auf die Patenterteilung: **26.09.2018**
(21) Anmeldenummer: 17150238.8
(22) Anmeldetag: 19.12.2013
(51) Int. Cl.: B63H 9/02, B63H 13/00

(54) **FAHRZEUGKÖRPER UND FAHRZEUG**
VEHICLE BODY AND VEHICLE
CARROSSERIE ET VÉHICULE AUTOMOBILE

(30) Priorität: 08.01.2013 DE 202013100067 U
(43) Veröffentlichungstag der Anmeldung: 05.07.2017
(62) Teilanmeldung aus: 13831895.1
(73) Patentinhaber: Rohden, Rolf, 26607 Aurich (DE)
(72) Erfinder: Rohden, Rolf, 26607 Aurich (DE)
(74) Vertreter: Weidner Stern Jeschke

(56) Entgegenhaltungen:
- WO-A2-2010/116024
- GB-A- 2 102 755
- US-A- 2 713 392

## Beschreibung

Die Erfindung betrifft eine Profilnase welche eine Rotationsachse aufweist, und mit einem um die Rotationsachse drehbar gelagerten Strömungselement, sodass ein Flettner-Antrieb gebildet ist, einen Fahrzeugkörper mit einem Profilteil und einer Profilnase mit einer Rotationsachse, wobei die Profilnase ein um die Rotationsachse drehbar gelagertes Strömungselement aufweist und das Profilteil und die Profilnase derart voneinander beabstandet sind, dass eine an dem Strömungselement angreifende Luftströmung aerodynamisch das Profilteil umströmt und ein Fahrzeug mit einem solchen Fahrzeugkörper.

Aus dem Stand der Technik sind eine Vielzahl von Antriebsarten für Fahrzeuge, beispielsweise für Schiffe oder Flugzeuge bekannt. Beispielsweise dient ein Schiffsmotor dem Antrieb des Wasserfahrzeuges, wohingegen Luftfahrtantriebe für die Vortriebserzeugung eines Luftfahrzeuges eingesetzt werden.

Eine alternative Schiffsantriebsform besteht aus einem sogenannten Flettner-Antrieb, der im Wesentlichen aus einem senkrecht stehenden hohen rotierenden Zylinder besteht, dessen Endscheiben, auch Deckel genannt, die Strömung am Zylinder halten.

Der Flettner-Antrieb erweist sich als Alternative zu herkömmlichen Antriebsvorrichtungen beziehungsweise als Ergänzung zu herkömmlichen Antriebsvorrichtungen, welche beispielsweise mit Dieselkraftstoff betrieben werden.

Darüber hinaus gibt es verschiedene segelbasierte Antriebe, welche die Windkraft ausnutzen. Hierbei kommen entsprechende Profilteile zum Einsatz.

Im Stand der Technik sind weiterhin Antriebe bekannt, welche einen Flettner-Antrieb und ein Profilteil miteinander kombinieren. Nachteilig an einer derartigen Konfiguration ist der benötigte Platzbedarf für die Verstellmöglichkeit des Profilteils, wodurch die Ladekapazität des Schiffs reduziert wird.

Ferner besteht bei bekannten Flettner-Antrieben Optimierungspotential. GB 2102755 offenbart einen Flettner-Antrieb mit einem Profilteil und einer Profilnase.

Die Aufgabe der vorliegenden Erfindung liegt darin, den Stand der Technik zu verbessern.

Diese Aufgabe wird gelöst durch eine Profilnase, welche eine Rotationsachse aufweist, und mit einem um die Rotationsachse drehbar gelagerten Strömungselement, sodass ein Flettner-Antrieb gebildet ist, wobei die Profilnase einen Deckel aufweist, wobei der Deckel rotationsfest in Bezug zum Strömungselement angeordnet ist.

Durch diesen (dreh)festen Deckel können die Strömungseigenschaften der Profilnase verbessert werden. Zudem wird die Masse der rotierenden Bestandteile verringert, sodass das Strömungselement mit geringerem Energiebedarf betreibbar ist.

Drehfest in diesem Sinne ist, dass der Deckel in Bezug zum Strömungselement statisch oder eben drehfest ist.

Weiterhin kann der Deckel zusätzlich rotationsfest in Bezug zu einem Fahrzeugkörper ausgestaltet sein. In diesem Fall ist der Deckel beispielsweise direkt oder indirekt fest mit dem Fahrzeugkörper verschraubt oder verschweißt.

Die im weiteren Text angegebenen Begriffsdefinitionen gelten auch für die vorliegenden Begrifflichkeiten wie Deckel, Strömungselement, Profilnase, Flettner-Antrieb und Fahrzeugkörper.

Zudem können die Merkmale dieser Profilnase auch mit den Merkmalen der folgenden Profilnase kombiniert werden.

Weiterhin wird die Aufgabe gelöst durch eine Profilnase, welche eine Rotationsachse aufweist, und mit einem um die Rotationsachse drehbar gelagerten Strömungselement, sodass ein Flettner-Antrieb gebildet ist, wobei das Strömungselement ein geschlossenes Volumen aufweist, wobei ein Gasaustausch zwischen dem geschlossenen Volumen und einer Umgebung des Strömungselementes im wesentlichen unterbleibt.

Eine solche Profilnase, bei der das Strömungselement ein geschlossenes Volumen aufweist, wurde erstmalig als besonders vorteilhaft erkannt, da sie besonders energieeffizient betreibbar ist. Durch das abgeschlossene Volumen werden insbesondere aerodynamische Verwirbelungen im Inneren des Strömungselements verringert, da sich eine laminare Schicht an der Innenseite des hohlen Strömungselements ausbildet und turbulente Strömung minimiert wird.

Eine Profilnase sei vorliegend synonym für einen sogenannten (modifizierten) Flettner-Antrieb zu verstehen. Der Flettner-Antrieb ist insbesondere ein alternativer aerodynamischer Antrieb in Form eines der Windströmung ausgesetzten, rotierenden Zylinders (Strömungselement), welcher durch den Magnus-Effekt eine Kraft quer zur Anströmung entwickelt. Er ist nach seinem Erfinder Anton Flettner benannt und kommt bisher vor allem in Rotorschiffen zur Anwendung. Als Schiffsantrieb besteht ein Flettner-Rotor aus einem senkrecht stehenden, hohen, rotierenden Zylinder meist aus Blech, dessen größere Endscheiben, vorliegend auch Deckel genannt, die Strömung am Rohr halten und dadurch eine sonst deutliche Verringerung des Wirkungsgrades am Ende des Rotors verhindern. Der Rotor wird häufig durch einen elektrischen Antrieb mit einer an die herrschende Windgeschwindigkeit angepassten Geschwindigkeit gedreht.

Dabei gilt, dass ein angeströmter starrer Zylinder regelmäßig durch den Windwiderstand der projizierten Fläche Kraft erzeugt, und zwar in Strömungsrichtung. Ein rotierender Zylinder hingegen erzeugt durch den Magnus-Effekt aus Sog- und Staudruckkräften darüber hinaus eine weitaus größere und quer zur Anströmung gerichtete Ablenkungskraft, welche dem Vortrieb dient. Ein ausschließlich mit Flettner-Rotoren des Standes der Technik ausgerüstetes Schiff muss deshalb ähnlich einem Segelschiff gegen den Wind aufkreuzen und bleibt bei Flaute antriebslos.

Bläst Wind gegen einen rotierenden Zylinder, so wird dieser beschleunigt, wobei Drehsinn des Zylinders und Windrichtung beieinanderliegen. Auf der gegenüberliegenden Zylinderseite wird der Wind abgebremst, strömt somit langsamer. Dies erzeugt Unterdruck (schnellere Strömung) und Überdruck (verlangsamte Strömung), in Summe also eine quer zur Strömung wirkende Kraft (dynamischer Auftrieb), ähnlich wie an einem stehenden (Flugzeug-)Tragflügel, doch mit weitaus besserem Wirkungsgrad - rund dem Zehnfachen eines Segels (Segelantriebs) oder starren Tragflügels mit gleichem Windwiderstand. Diese (Teil-)Kraft wirkt in die Richtung, in der Strömungsrichtung und Drehrichtung des Körpers gleichsinnig sind, und hängt (wie letztlich die Fahrgeschwindigkeit) von der Anströmungsgeschwindigkeit, der Drehgeschwindigkeit des Rotors und entscheidend auch vom Verhältnis beider zueinander ab. Die Geschwindigkeit der Rotoroberfläche liegt oft etwa beim Drei- bis Vierfachen der Windgeschwindigkeit, um einen sehr effizienten Antrieb zu ermöglichen, was bei Schiffsantrieben meistens im Bereich von grob 100 Umdrehungen pro Minute liegt.

Änderung der Drehrichtung des Rotors bewirkt die Umkehrung der dadurch erzeugten Kraftkomponente. In jedem Fall aber wirkt eine zweite Kraftkomponente, welche aus dem Widerstand entsteht, in Strömungsrichtung. Die Summe dieser beiden Teilkräfte wird beim Flettner-Antrieb ausgenutzt.

Vorliegend wird insbesondere der Begriff "Profilnase" verwendet, da das Anströmen aus unterschiedlichsten Richtungen erfolgen kann und somit auf den Flettner-Antrieb wirkt. Somit ist die Profilnase eine angeströmtes Vorrichtung.

Die durch die Rotation erzeugten, quer zum Wind wirkenden Antriebskräfte der Strömungselemente (Rotoren) leisten, wie normale Segel, im Allgemeinen keinen Vortrieb bei Im-Wind-Kursen und, im Gegensatz zu normalen Segeln, auch nicht bei Kursen vor dem Wind. Die Drehzahl des Rotors kann mit der Windgeschwindigkeit gesteigert werden, so dass bei hoher Windenergie auch hohe Antriebsenergie für die Rotoren bereitgestellt werden kann.

Als "Rotationsachse" soll vorliegend diejenige Gerade verstanden sein, um die eine Drehung (Rotation) eines Rotationskörpers, vorliegend eines Strömungselements, erfolgt oder erfolgen kann.

Als "drehbar gelagert" soll vorliegend insbesondere verstanden sein, dass mindestens ein Drehlager vorhanden ist, das allgemein zum Führen gegeneinander drehbar beweglicher Bauteile dient.

Als "Strömungselement" soll vorliegend insbesondere ein (rotierbar ausgelegter) Körper verstanden sein, an dem eine Antriebsströmung entlang strömen kann.

Bei einem "geschlossenen Volumen" ist zum Beispiel das Volumen gegenüber einer Umgebung, beispielsweise durch eine Wand oder Dichtung, abgetrennt.

Unter einem "im Wesentlichen Unterbleiben eines Gasaustausches", beispielsweise von Stickstoff, Sauerstoff oder weiterer Atemluftbestandteile, wie sie bei üblichen Windverhältnissen vorliegen, wird vorliegend insbesondere verstanden, dass Dichtungselemente oder Konstruktionsweisen vorgesehen sind, welche die Aufgabe haben, einen Gasaustausch zwischen zwei Volumina zu verhindern oder zu begrenzen. Als Dichtungselement kann beispielsweise eine Stopfbuchse, eine Radialwellendichtung, ein Axialwellendichtring, eine Gleitringdichtung oder eine Bürstendichtung vorgesehen sein.

Um das Strömungselement möglichst reibungsfrei zu lagern, kann das Strömungselement in einer ersten Aufnahme und einer zweiten Aufnahme gelagert sein.

Unter einer "Aufnahme" soll vorliegend ein Drehlager, beispielsweise ein Gleitlager oder ein Wälzlager oder ein Magnetlager, verstanden sein.

Vorliegend können auch weitere Lager in den Aufnahmen oder weitere Aufnahmen mit entsprechenden Lagen vorgesehen sein, sodass das Strömungselement schwingungssteifer angeordnet werden kann.

In einer Ausgestaltung weist die Profilnase einen Rotationsantrieb auf, welcher derart eingerichtet ist, dass das Strömungselement mittels dieses Rotationsantriebes in eine Rotation versetzbar ist.

Hierdurch wird es vorteilhaft ermöglicht, die Profilnase in Rotation zu versetzen.

Der Rotationsantrieb kann beispielsweise ein elektrisch betriebener Antrieb, ein Verbrennungskraftantrieb oder ein Hybridantrieb sein, welcher jeweils beispielsweise mittels ineinandergreifende Zahnräder oder Riemen umgelenkt wird.

Um die Leistung des modifizierten Flettner-Antriebs in ihrer Höhe steuern zu können, kann die Profilnase eine Bremseinrichtung aufweisen, welche derart eingerichtet ist, dass die Rotation des Strömungselements mittels der Bremseinrichtung abbremsbar ist.

Unter einer "Bremseinrichtung" wird vorliegend insbesondere eine mechanische, elektrische oder magnetische Bremse verstanden, insbesondere eine Trommelbremse, Scheibenbremse, Wirbelstrombremse oder Hysteresebremse.

Um bei Nichtbenutzung des modifizierten Flettner-Antriebs eine Eigenrotation der Profilnase zu unterbinden, kann die Profilnase besonders vorteilhaft eine Feststelleinrichtung zum Fixieren des Strömungselements aufweisen.

Unter einer "Feststelleinrichtung" soll insbesondere eine mechanische, elektrische oder magnetische Feststelleinrichtung, beispielsweise ein Anker, verstanden sein.

Um die Vortriebskraft des modifizierten Flettner-Antriebs den herrschenden Windströmungen anpassen zu können, kann der Rotationsantrieb eine Steuerung und/oder Regelung aufweisen, mittels derer eine Rotationsrichtung und/oder eine Rotationsgeschwindigkeit und/oder eine Rotationsgeschwindigkeitsänderung des Strömungselements steuerbar und/oder regelbar ist.

Unter einer Steuerung wird vorliegend insbesondere verstanden, dass eine prinzipiell veränderliche Größe, insbesondere die Rotationsgeschwindigkeit des Strömungselements, beeinflusst wird. Unter einer Regelung wird vorliegend insbesondere verstanden, dass ein Wert einer konstant zu haltenden Größe, insbesondere die Rotationsgeschwindigkeit des Strömungselements, als Istwert festgestellt und bei Abweichung von einem gewollten Sollwert so verändert wird, dass dieser sich diesem wieder nähert. Die Steuerung und/oder Regelung kann vorliegend rechnerbasiert automatisiert werden.

Um den Wirkungsgrad des modifizierten Flettner-Antriebs zu erhöhen, kann die Profilnase einen Deckel aufweisen, wobei der Deckel insbesondere rotationsfest in Bezug zum Strömungselement angeordnet ist.

Unter einem "Deckel" soll vorliegend insbesondere ein aerodynamisch geformter Körper aus einem Material mit einem hohen Elastizitätsmodul, beispielsweise Stahl oder kohlenstofffaserverstärkter Kunststoff (CFK), verstanden sein.

Die Aufgabe wird ferner gelöst durch einen Fahrzeugkörper, der eine zuvor beschriebene Profilnase aufweist.

Der Vorteil eines solchermaßen ausgestalteten Fahrzeugkörpers, beispielsweise eines Schiffsrumpfes oder eines Flugzeugrumpfes oder -flügels, liegt in einer besonders energieeffizienten Antriebsweise.

Die Aufgabe wird ferner gelöst durch einen Fahrzeugkörper mit einem Profilteil und einer Profilnase mit einer Rotationsachse, wobei die Profilnase ein um die Rotationsachse drehbar gelagertes Strömungselement aufweist und das Profilteil und die Profilnase derart voneinander beabstandet sind, dass eine an dem Strömungselement angreifende Luftströmung aerodynamisch das Profilteil umströmt, wobei das Profilteil und die Profilnase am Fahrzeugkörper fixiert, insbesondere drehfest fixiert, sind.

Es hat sich gezeigt, dass ein solchermaßen ausgestalteter Fahrzeugkörper eine besonders energie- und raumsparende Antriebslösung für ein Fahrzeug darstellt.

Überraschenderweise hat sich herausgestellt, dass eine Umströmung von Profilnase und Profilteil unabhängig von einem Anströmwinkel erfolgt. Das bedeutet insbesondere dass es zu keinem Strömungsabriss (auch "Stall" gennant) oder einer sogennanten Strömungsablösung kommt.

Bezüglich der Definition der "Profilnase", "Strömungselement" "Rotationsachse" und "drehbar gelagert" wird auf obige Ausführungen verwiesen, welche vorliegend analog gelten sollen.

Als "Profilteil" wird vorliegend insbesondere ein der Profilnase abgewandtes Flügelprofil bezeichnet und hat keine Möglichkeit der Rotation.

Unter einer insbesondere drehfesten Fixierung des Profilteils und der Profilnase am Fahrzeugkörper wird vorliegend eine Verschraubung, Vernietung oder Verschweißung des Profilteils und der Profilnase am Fahrzeugkörper verstanden. Es sei darauf hingewiesen, dass beispielsweise ein Lager und/oder eine Aufnahme der Rotationsache fest im Fahrzeugkörper angeordnet ist, sodass trotz fixierter Profilnase das Strömungselement in Rotation versetzbar ist.

"Aerodynamisch umströmt" sei vorliegend und im gesamten Text eine Strömung, welche am Profilteil nicht abreißt (englisch "Stall" genannt) oder sich ablöst.

Um das Strömungselement möglichst reibungsfrei zu lagern, kann die Profilnase insbesondere so eingerichtet sein, dass das Strömungselement in einer ersten Aufnahme und einer zweiten Aufnahme, beispielsweise einem Gleitlager oder einem Wälzlager oder einem Magnetlager, gelagert ist.

Zur Optimierung des Auftriebswerts des Profilteils kann dieses insbesondere eine geometrische Form aufweisen, insbesondere eine symmetrische oder gewölbte Form, aufweisen, wobei insbesondere die geometrische Form abgerundet, spitz, viereckig, quadratisch, rechteckig, trapezförmig, parallellogrammförmig, polygonal und/oder dreieckig ist.

Dabei definiert die gewölbte oder die symmetrische Form insbesondere die Eigenschaften einer horizontalen Schnittfäche durch das Profilteil. Insbesondere kann die Wölbung konkav oder konvex sein. Sowohl die symmetrische als auch die gewölbte Form ist auftriebsoptimiert, sodass ein Vortrieb, welcher den Wind ausnutzt, verbessert wird.

Die abgerundete, spitze, viereckige, quadratische, rechteckige, trapezförmige, parallellogrammförmige, polygonale und/oder dreieckige Form entspricht im Wesentlichen der Form, welche bei einer Seitenansicht (beispielsweise von steuerbord oder backbord) durch einen Betrachter wahrgenommen wird.

Die Profilnase kann eine Profilnasenausdehnung, beispielsweise einen Durchmesser und eine zur Profilnasenausdehnung orthogonale Profilnasenhöhe aufweisen, ferner kann das Profilteil eine Profilteilhöhe und eine zur Profilteilhöhe orthogonale Profilteilausdehnung aufweisen. Es hat sich als besonders vorteilhaft für die laminare Führung der Windströmung herausgestellt, wenn die Profilnasenausdehnung ein ganzzahliges Vielfaches der Profilteilausdehnung beträgt.

Um die Ladekapazität des Fahrzeugkörpers zu erhöhen, kann das Profilteil insbesondere einen innen liegenden, insbesondere ausgehöhlten Profilteilbereich aufweisen. Der Profilteilbereich ist insbesondere mit einem Innenbereich des Fahrzeugkörpers verbunden.

In dem innen liegenden Profilteilbereich des Profilteils kann ein das Strömungselement antreibender Antrieb, beispielsweise ein elektrisch betriebener Antrieb, ein Verbrennungskraftantrieb oder ein Hybridantrieb, verortet sein. Diese Anordnung ist besonders platzsparend.

Es kann weiterhin oder alternativ vorgesehen sein, dass aus dem Innenbereich des Fahrzeugkörpers mindestens eine Transportleitung, beispielsweise ein Rohr oder ein Kabel, in das und/oder durch das Profilteil geführt wird und insbesondere die Transportleitung an einen Außenbereich des Profilteils, beispielsweise an dessen Hinterkante, geführt ist. Diese Anordnung ist ebenso besonders platzsparend.

Über die Transportleitungen können insbesondere Abgase und oder elektrische Signale oder elektrische Ströme transportiert werden. Sie können auch allgemein der Belüftung des Inneren des Fahrzeugkörpers dienen. Durch diese Anordnung können insbesondere platzraubende Belüftungseinrichtungen eingespart werden.

Zudem kann der Fahrzeugkörper eine Profilnase aufweisen, welche einer zuvor beschriebenen Profilnase entspricht. Dabei kann die Profilnase einen direkt oder indirekt drehfest mit dem Fahrzeugkörper verbundenen Deckel aufweisen und/oder derart ausgestaltet sein, dass das Strömungselement ein geschlossenes Volumen aufweist, wobei ein Gasaustausch zwischen dem geschlossenen Volumen und einer Umgebung des Strömungselements im Wesentlichen unterbleibt.

Zudem kann das Strömungselement ein geschlossenes Volumen aufweisen, wobei ein Gasaustausch zwischen dem geschlossenen Volumen und einer Umgebung des Strömungselements im Wesentlichen unterbleibt. Hiermit kann die innere Reibung im Strömungselement verringert werden, sodass der Flettner-Antrieb verbessert werden kann.

In einer Ausführungsform weist die Profilnase einen Deckel auf, wobei der Deckel rotationsfest in Bezug zum Strömungselement (251) angeordnet ist, wobei der Deckel insbesondere direkt oder indirekt mit dem Fahrzeugkörper fest (z.B. durch Verschrauben oder Verschweißen) verbunden ist.

Nach dem Stand der Technik rotieren derartige Deckel jeweils mit dem Strömungselement. Es hat sich überraschender Weise herausgestellt, dass dies strömungstechnisch nicht notwendig ist. Somit verringert sich bei einem rotationsfesten Deckel die in Rotation zu versetzende Masse des Strömungselements.

In der Konfiguration mit dem festen Deckel kann ein Lager der Rotationsachse in dem Deckel fest angebracht sein, sodass der Deckel bei Rotation des Strömungselements statisch in Bezug zum Rotationselement bleibt.

Bei einer "direkten Verbindung" wird der Deckel mit dem Fahrzeug kontaktiert. Bei einer "indirekten Verbindung" kann dies beispielsweise über das Profilteil erfolgen

Um die Strömung der Profilnase besser zu leiten, kann der Deckel sich über die Profilnase hinaus, wenigstens bis zum Profilteil, erstrecken.

Als besonders vorteilhaft hat es sich erwiesen, dass der Profilteilauftriebsbeiwert des Profilteils einen Wert größer 2 und der Flettner-Auftriebsbeiwert des Flettner-Antriebs einen Wert größer 10 aufweist. Hierdurch ist eine besonders energieeffiziente Nutzung des alternativen Antriebes möglich.

Der Profilteilauftriebsbeiwert charakterisiert insbesondere den dynamischen Auftrieb des von einem Fluid umströmten Profilteils. Der Flettner-Auftriebsbeiwert charakterisiert beispielsweise in analoger Weise den dynamischen Auftrieb des Flettner-Antriebs. Der Auftriebsbeiwert ist im Wesentlichen auch von der Orientierung des jeweiligen Körpers in der Strömung abhängig, dieses wird ausgedrückt durch den sogenannten Anstellwinkel.

Die Anordnung der Profilnase und des Profilteiles kann im Wesentlichen auf einer Längslinie des Fahrzeugkörpers ausgeführt sein, da diese Konfiguration bei gutem Vortrieb für die Stabilität des Fahrzeuges vorteilhaft ist.

Eine "Längslinie" erstreckt sich im Wesentlichen in Fahrzeugkörperlängsrichtung. Dabei ist insbesondere eine Sehne des Profilteils parallel zur Längslinie oder Mittellinie des Fahrzeugs ausgerichtet. Die Sehne kann insbesondere an einer horizontalen Schnittfläche des Profilteils bestimmt werden.

Schließlich wird die Aufgabe, den Stand der Technik zu verbessern, durch ein Fahrzeug mit einem zuvor beschriebenen Fahrzeugkörper gelöst.

Unter einem Fahrzeug wird vorliegend ein mobiles Verkehrsmittel verstanden, welche dem Transport von Gütern, Werkzeugen oder Personen dient. Insbesondere sollen hierunter Luft- und Wasserfahrzeuge, wie Schiffe, insbesondere Containerschiffe, und Flugzeuge, verstanden sein. Auch Tragflächen, insbesondere von Flugzeugen, seien vom Begriff Fahrzeugkörper mit umfasst, sodass das Flugzeug ein obiges Fahrzeug sein kann.

Dabei kann das Fahrzeug einen zusätzlichen Fahrzeugantriebsmotor aufweisen, da es von Vorteil sein kann, im Falle einer Nichtverfügbarkeit des Flettner-Antriebs, diesen zu ersetzen oder im Ergänzungsbetrieb zu nutzen.

Im Weiteren wird die Erfindung anhand von Ausführungsbeispielen erläutert. Es zeigen
- Figur 1a: eine schematische Darstellung eines Schiffes mit einem modifiziertem Flettner-Antrieb und einem Profilteil in einer Seitenansicht,
- Figur 1b: eine schematische Darstellung eines Flugzeuges mit einem Flettner-Auftriebsrotor in einer Draufsicht von oben,

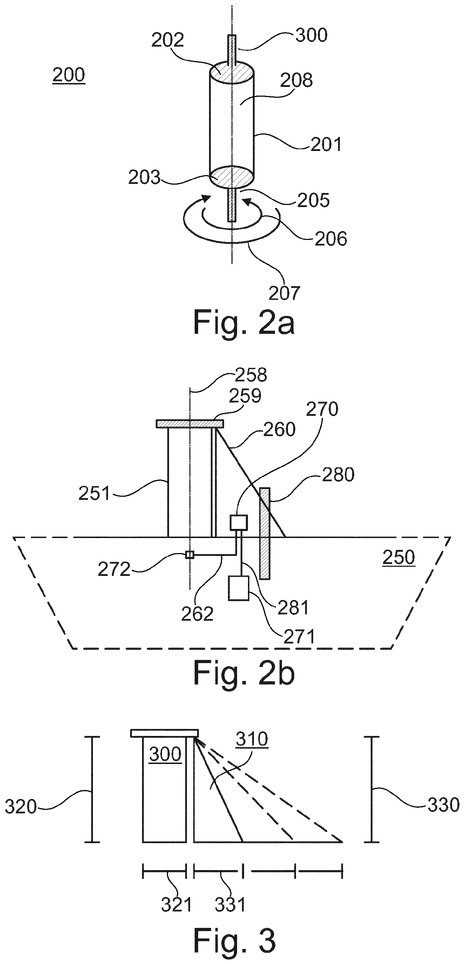

- Figur 2a: eine schematische Darstellung eines modifizierten Flettner-Antriebs,
- Figur 2b: eine schematische Darstellung eines Fahrzeugkörpers,
- Figur 3: eine schematische Darstellung der Dimensionierung des Profilteils in Bezug zur Profilnase,
- Figur 4a: eine schematische Darstellung einer Schiffskonfiguration mit einem ersten Anstellwinkel und
- Figur 4b: eine schematische Darstellung einer Schiffskonfiguration mit einem zweiten Anstellwinkel.

In einer ersten Ausführungsform weist ein modifizierter Flettner-Antrieb 200/110 einen dünnwandigen Rotationszylinder 201 aus CFK mit einem oberen abgedichteten Abschluss 202 und einem unteren abgedichteten Abschluss 203 auf. Der Rotationszylinder 201 ist in einem oberen Lager 204 und einem unteren Lager 205 drehbar gelagert. Der dünnwandige Rotationszylinder 201 ist um die Rotationsachse 208 in den beiden gegenläufigen Drehrichtungen 206 und 207 drehbar.

Der Flettner-Antrieb 200/110 ist auf einem Schiff 100 angeordnet, welches einen Schiffsmotor 101 mit einer Schiffsschraube 102 aufweist. Der Hauptvortrieb des Schiffs 100 wird durch den Schiffsmotor 101, welcher Schweröl verbrennt, und der Schiffsschraube 102 geleistet. Durch den modifizierten Flettner-Antrieb 200/110 entsteht bei Rotation des dünnwandigen Rotationszylinders 201 und geeigneten Windverhältnissen ein Vortrieb in Fahrtrichtung 120 des Schiffs 100, welcher den Hauptvortrieb unterstützt.

In einer Alternative weist ein Fahrzeugkörper 250 oder das Schiff 100 einen modifizierten Flettner-Antrieb (Profilnase) 251 und ein Profilteil 260 auf. Der modifizierte Flettner-Antrieb 251 weist eine Rotationsachse 258 und einen Deckel 259 auf, wobei der Deckel 259 fest am Profilteil 260 angebracht ist.

In einem Abstand von 0,2m zum modifizierten Flettner-Antrieb 251 ist das dreieckförmige Profilteil 260 angeordnet und mit dem Fahrzeugkörper 250 verschweißt. In dem Profilteil 260 ist ein Generator 270 und eine mit dem Generator 270 über eine elektrische Transportleitung 281 verbundene Regelung 271 vorgesehen. Der Generator 270 treibt über eine Kette 282 den modifizierten Flettner-Antrieb an einem Ritzel 272 einer Welle (nicht dargestellt) an. Die Stromerzeugung für den Generator 270 erfolgt durch den Schiffsmotor 101.

Eine Kraftübertragung an eine Welle wird in eine Rotation des dünnwandigen und abgedichteten Rotationszylinders 201/251 überführt.

Eine Abgasleitung 280 führt Abgase des Schwerölantriebs 101 aus dem Fahrzeugkörper 250 durch das Profilteil 260 an die Umgebung des Fahrzeugs 100/250.

Die Profilnase 300 weist eine Profilnasenhöhe 320 von 15,0m und eine Profilnasenausdehnung 321 von 6,0m auf. Ferner weist das Profilteil 310 eine Profilteilhöhe 330 von 15,0m und eine Profilteilausdehnung 331 12,0m auf. Die Profilteilausdehnung 331 ist doppelt so groß wie die Profilnasenausdehnung 321. Alternativ ist diese dreimal oder viermal so groß.

In einer alternativen Ausgestaltungsform ist der modifizierte Flettner-Antrieb 200/152 an den Flugzeugtragflächen 151, welche das Profilteil bilden, eines Flugzeuges 150, das in Flugrichtung 153 fährt oder fliegt, angeordnet. Durch eine angepasste Rotation des Hohlzylinders des modifizierten Flettner-Antriebs 152 wird der Auftrieb des Flugzeugs beeinflusst, sodass beim Start - und somit bei niedrigen Geschwindigkeiten - ein großer Auftrieb bereitgestellt werden kann, welcher in großen Höhen und/oder bei hohen Geschwindigkeiten verringert wird.

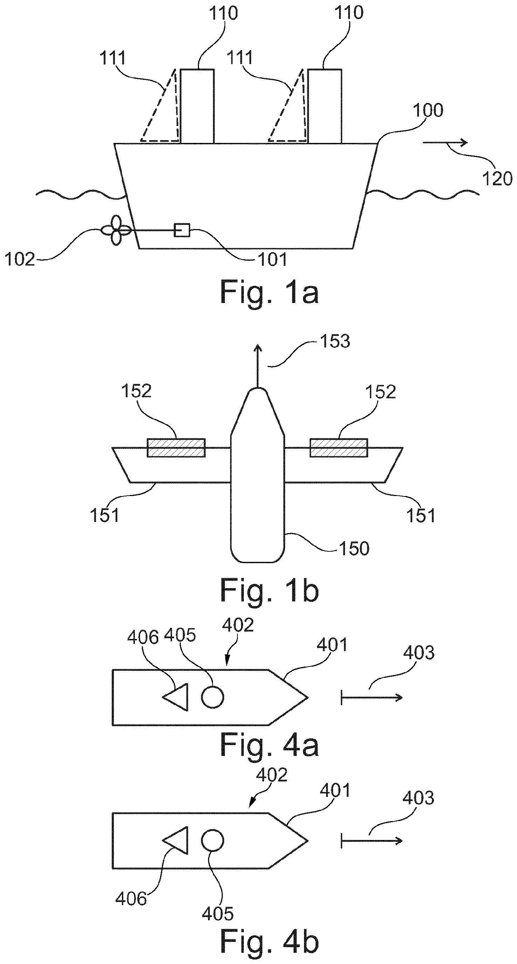

Die grundsätzliche Funktionsweise ist wie folgt (siehe Fig. 4). Je nach Windvorzugsrichtung 402 ändert sich der Angriffswinkel an der Profilnase 405 (modifizierter Flettner-Antrieb) und dem Profilteil 406, die vorliegend beispielsweise auf dem Schiff 401 angebracht sind, sodass sich der Schiffsgeschwindigkeitsvektor 403, insbesondere der Betrag des Schiffsgeschwindigkeitsvektors 403, ändert. Dabei wird die Strömung des (Schein)Windes an der Profilnase 405 aufgenommen und strömungsabrissfrei an dem Profilteil 406 abgeleitet. Insbesondere erfolgt dies auch dann, wenn der (Schein)Wind nicht rechtwinklig an der Profilnase 405(Flettner-Antrieb) anliegt.

### Bezugszeichenliste

- 100: Schiff
- 101: Schiffsmotor
- 102: Schiffsschraube
- 110: Flettner-Antrieb
- 111: Profilteil
- 120: Fahrtrichtung
- 150: Flugzeug
- 151: Flugzeugtragfläche
- 152: Flettner-Antrieb
- 153: Flugrichtung
- 200: Flettner-Antrieb
- 201: Strömungselement
- 202, 203: oberer, unterer Abschluss
- 204,: 205 oberes, unteres Lager
- 206,: 207 Drehrichtung
- 208: Rotationsachse
- 250: Fahrzeugkörper
- 251: Profilnase
- 258: Rotationsachse
- 259: Deckel
- 260: Profilteil
- 270: Antrieb
- 271: Steuerung/Regelung
- 272: Kraftübertragung
- 280, 281, 282: Transportleitung
- 300: Profilnase
- 310: Profilteil
- 320: Profilnasenhöhe
- 321: Profilnasenausdehnung
- 330: Profilteilhöhe
- 331: Profilteilausdehnung
- 401: Schiff
- 402: Windvorzugsrichtung
- 403: Schiffsgeschwindigkeitsvektor
- 405: Profilnase
- 406: Profilteil

## Patentansprüche

1. Fahrzeugkörper (250) mit einem Profilteil (260) und einer Profilnase mit einer Rotationsachse (258), wobei die Profilnase ein um die Rotationsachse (258) drehbar gelagertes Strömungselement aufweist und das Profilteil (260) und die Profilnase derart voneinander beabstandet sind, dass eine an dem Strömungselement angreifende Luftströmung aerodynamisch das Profilteil (260) umströmt, das Profilteil (260) und die Profilnase am Fahrzeugkörper (250) fixiert, insbesondere drehfest fixiert, sind, **dadurch gekennzeichnet, dass** das Profilteil (260) einen innenliegenden, insbesondere ausgehöhlten, Profilteilbereich aufweist, welcher insbesondere mit einem Innenbereich des Fahrzeugkörpers (250) verbunden ist, und aus dem Innenbereich des Fahrzeugkörpers (250) mindestens eine Transportleitung (280, 281, 282) in das und/oder durch das Profilteil (260), insbesondere an einen Außenbereich des Profilteils (260), geführt ist.

2. Fahrzeugkörper (250) nach Anspruch 1, **dadurch gekennzeichnet, dass** der Fahrzeugkörper eine zweite Transportleitung, eine dritte Transportleitung, eine vierte Transportleitung und/oder eine weitere Transportleitung aufweist.

3. Fahrzeugkörper (250) nach einem der vorherigen Ansprüche, **dadurch gekennzeichnet, dass** die Transportleitung oder die Transportleitungen (280, 281, 282) für den Transport von Abgasen und/oder elektrischen Signalen ausgebildet ist oder sind.

4. Fahrzeugkörper (250) nach einem der vorherigen Ansprüche, **dadurch gekennzeichnet, dass** die Transportleitung oder die Transportleitungen (280, 281, 282) für eine Belüftung des Innenbereichs des Fahrzeugkörpers (250) ausgebildet ist oder sind.

5. Fahrzeug (100, 150) mit einem Fahrzeugkörper (250) nach einem der vorherigen Ansprüche.

6. Fahrzeug (100, 150) nach Anspruch 5 mit einem Fahrzeugantriebsmotor (101).

## Claims

1. A vehicle body (250) with a profiled part (260) and a leading edge with a rotational axis (258), wherein the leading edge comprises a flow element mounted so as to be rotatable around the rotational axis (258) and the profiled part (260) and the leading edge are spaced-apart in such a manner that an air flow acting on the flow element aerodynamically flows around the profiled part (260), wherein the profiled part (260) and the leading edge are fastened, in particular in a non-rotating manner, to the vehicle body (250), **characterized in that** the profiled part (260) comprises an internal, in particular hollowed, profiled part area, which is joined in particular with an inner area of the vehicle body (250), and that at least one transmission line (280, 281, 282) is led out of the inner area of the vehicle body (250) into and/or through the profiled part (260), in particular to an outer area of the profiled part (260).

2. The vehicle body (250) according to claim 1, **characterized in that** the vehicle body comprises a second transmission line, a third transmission line, a fourth transmission line and/or another transmission line.

3. The vehicle body (250) according to one of the afore-mentioned claims, **characterized in that** the transmission line or the transmission lines (280, 281, 282) are designed for transporting exhaust gases and/or electrical signals.

4. The vehicle body (250) according to one of the afore-mentioned claims, **characterized in that** the transmission lines (280, 281, 282) are designed for ventilation of the inner area of the vehicle body (250).

5. A vehicle (100, 150) with a vehicle body (250) according to one of the afore-mentioned claims.

6. A vehicle (100, 150) according to claim 5 with a vehicle drive motor (101).

## Revendications

1. Corps de véhicule (250) avec une partie profilée (260) et un bord d'attaque avec un axe de rotation (258), où le bord d'attaque comporte un élément d'écoulement monté de manière rotative autour de l'axe de rotation (258) et la partie profilée (260) et le bord d'attaque sont espacés l'un de l'autre de telle manière qu'un écoulement d'air attaquant l'élément d'écoulement s'écoule de manière aérodynamique autour de la partie profilée (260), où la partie profilée (260) et le bord d'attaque sont fixés, en particulier fixés de manière non rotative, sur le corps de véhicule (250), **caractérisé en ce que** la partie profilée (260) comporte une région de partie profilée interne, en particulier évidée, qui est en particulier reliée avec une région intérieure du corps de véhicule (250) et que au moins une ligne de transport (280, 281, 282) est menée dans et/ou à travers la partie profilée (260), en particulier jusqu'à une région extérieure de la partie profilée (260).

2. Corps de véhicule (250) selon la revendication 1, **caractérisé en ce que** le corps de véhicule comporte une deuxième ligne de transport, une troisième ligne de transport, une quatrième ligne de transport et/ou une ligne de transport supplémentaire.

3. Corps de véhicule (250) selon l'une des revendications précédentes, **caractérisé en ce que** la ligne de transport ou les lignes de transport (280, 281, 282) est ou sont conçues pour le transport de gaz d'échappement et/ou de signaux électriques.

4. Corps de véhicule (250) selon l'une des revendications précédentes, **caractérisé en ce que** la ligne de transport ou les lignes de transport (280, 281, 282) sont conçues pour une aération de la région intérieure du corps de véhicule (250).

5. Véhicule (100, 150) avec un corps de véhicule (250) selon l'une des revendications précédentes.

6. Véhicule (100, 150) selon la revendication 5 avec un moteur d'entraînement de véhicule (101).
